# EUROPÄISCHE PATENTANMELDUNG

(11) **EP 2 584 686 A1**
(43) Veröffentlichungstag der Anmeldung: **24.04.2013**
(21) Anmeldenummer: 11185978.1
(22) Anmeldetag: 20.10.2011
(51) Int. Cl.: H02M 1/32, H02J 7/34, H02J 7/00

(54) **Symmetrierungsschaltung für in Reihe geschalteten Zwischenkreiskondensatoren, und Verfahren zu deren Betrieb**

(71) Anmelder: Siemens Aktiengesellschaft, 80333 München (DE)
(72) Erfinder: Donat, Albrecht, 91462 Dachsbach (DE)

(57) **Zusammenfassung**

Symmetrierungsschaltung zur Symmetrierung von in Reihe geschalteten Zwischenkreiskondensatoren, Verfahren zum Betrieb einer solchen Symmetrierungsschaltung und Zwischenkreisumrichter mit einer solchen Symmetrierungsschaltung

Die Erfindung betrifft eine Symmetrierungsschaltung (10) zur Symmetrierung von zumindest einem ersten und einem zweiten in Reihe geschalteten Zwischenkreiskondensator (12,14) und ein Verfahren zu deren Betrieb sowie eine Verwendung einer solchen Schaltung für einen Zwischenkreisumrichter, wobei parallel zu dem ersten Zwischenkreiskondensator (12) und parallel zu dem zweiten Zwischenkreiskondensator (14) ein erstes bzw. ein zweites elektrisches Schaltelement (38,40) angeschlossen ist, wobei ein Mittelabgriff zwischen dem ersten und dem zweiten Zwischenkreiskondensator (12,14) und ein Mittelabgriff zwischen dem ersten und dem zweiten Schaltelement (38, 40) durch eine Induktivität (42) verbunden sind und wobei bei einer Spannungsüberhöhung am ersten oder am zweiten Zwischenkreiskondensator (12,14) eine Pulsfrequenz an das erste bzw. zweite Schaltelement (38,40) anlegbar und der erste oder zweite Zwischenkreiskondensator (12,14) während einer jeweiligen Pulsdauer über die Induktivität (42) und das jeweilige Schaltelement (38,40) partiell entladbar ist.

## Beschreibung

Symmetrierungsschaltung zur Symmetrierung von in Reihe geschalteten Zwischenkreiskondensatoren, Verfahren zum Betrieb einer solchen Symmetrierungsschaltung und Zwischenkreisumrichter mit einer solchen Symmetrierungsschaltung

Die Erfindung betrifft eine Symmetrierungsschaltung zur Symmetrierung von in Reihe geschalteten Zwischenkreiskondensatoren sowie ein Verfahren zum Betrieb einer solchen Symmetrierungsschaltung und schließlich einen Zwischenkreisumrichter mit einer solchen Symmetrierungsschaltung. Die Symmetrierungsschaltung ist zur Symmetrierung von zumindest einem ersten und einem zweiten in Reihe geschalteten Zwischenkreiskondensator eines Zwischenkreisumrichters vorgesehen.

Eine mit der Symmetrierungsschaltung bewirkte Symmetrierung der zumindest zwei in Reihe geschalteten Zwischenkreiskondensatoren ist erforderlich, weil in der Antriebstechnik mit Umrichterzwischenkreisspannungen von 600 Volt und mehr üblicherweise jeweils zwei Zwischenkreiskondensatoren in Reihe geschaltet werden, um als Zwischenkreiskondensatoren Kondensatoren mit einer bestimmten Spannungsfestigkeit einsetzen zu können. Die so erreichte Symmetrierung vermeidet unzulässige Spannungen aufgrund von Ladungsverschiebungen an den Zwischenkreiskondensatoren. Ziel der Symmetrierung ist, jeweils die halbe Zwischenkreisspannung an jedem der Kondensatoren anliegen zu haben.

Bekannte Symmetrierungsschaltungen basieren auf in Reihe geschalteten Widerständen, wobei jeweils einer der beiden in Reihe geschalteten Widerstände parallel zu jeweils einem der mindestens zwei Zwischenkreiskondensatoren angeschlossen ist. Durch die im Folgenden als Symmetrierungswiderstände bezeichneten, parallel zu jeweils einem Zwischenkreiskondensator angeschlossenen Widerstände fließt beim Betrieb der Symmetrierungsschaltung ein Strom, was in nachteiliger Art und Weise zu einer dauernden Verlustleistung führt.

Eine Aufgabe der Erfindung besteht entsprechend darin, eine Symmetrierungsschaltung, ein Verfahren zum Betrieb einer solchen Symmetrierungsschaltung und einen Zwischenkreisumrichter mit einer solchen Symmetrierungsschaltung anzugeben, bei dem die oben skizzierten Nachteile vermieden, zumindest jedoch deren Auswirkungen reduziert sind. In einem speziellen Aspekt besteht eine Aufgabe der Erfindung darin, Verlustleistung, wie sie durch passive Symmetrierung mit Symmetrierungswiderständen entsteht, zu reduzieren.

Erfindungsgemäß wird hierbei durch eine aktive Beschaltung der Symmetrierungsschaltung eine Ladungsverschiebung durch Umladung erreicht. Eine solche aktive Symmetrierungsschaltung zur Symmetrierung von zumindest einem ersten und einem zweiten in Reihe geschalteten Zwischenkreiskondensator ist in Anspruch 1 definiert und zeichnet sich durch folgende Merkmale aus: In einem Parallelzweig zu dem ersten Zwischenkreiskondensator und einem Parallelzweig zu dem zweiten Zwischenkreiskondensator ist ein erstes bzw. ein zweites elektrisches Schaltelement angeschlossen. Ein Mittelabgriff zwischen dem ersten und dem zweiten Zwischenkreiskondensator ist durch ein passives, als Energiespeicher fungierendes Bauelement, insbesondere eine Induktivität, mit einem Mittelabgriff zwischen dem ersten und dem zweiten Schaltelement verbunden. Bei einer Spannungsüberhöhung am ersten oder am zweiten Zwischenkreiskondensator ist eine Pulsfrequenz an das erste bzw. zweite Schaltelement anlegbar und der erste oder zweite Zwischenkreiskondensator ist während einer jeweiligen Pulsdauer über die Induktivität und das jeweilige Schaltelement partiell entladbar, um die jeweilige Spannungsüberhöhung zu verringern.

Der Vorteil der Erfindung besteht insbesondere darin, dass mit dem als Energiespeicher fungierenden Bauelement, also insbesondere der Induktivität, bei einer festgestellten Unsymmetrie der jeweiligen Spannungen über den zumindest zwei Zwischenkreiskondensatoren oder einer Unsymmetrie der jeweiligen Ladezustände im Gegensatz zur früher in Kauf genommenen Verlustleistung nur eine Ladungsverschiebung durch Umladung bewirkt wird und entsprechend Verlustleistung nicht mehr oder nur noch in vernachlässigbar geringem Umfang im Zusammenhang mit der Symmetrierung auftritt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform weist die Symmetrierungsschaltung jeweils eine zum ersten und zum zweiten Zwischenkreiskondensator parallel geschaltete Diode auf, wobei ein Mittelabgriff zwischen den beiden Dioden auf elektrisch gleichem Potential wie der Mittelabgriff zwischen dem ersten und dem zweiten Schaltelement liegt. Die erste und die zweite Diode fungieren jeweils als Freilaufdiode und die in der Induktivität gespeicherte Energie wird auch bei gesperrtem Schaltelement in den jeweils parallel geschalteten Zwischenkreiskondensator entladen. Die Funktionalität der Freilaufdiode in der Symmetrierungsschaltung kann grundsätzlich auch mit einem geeignet angesteuerten Schaltelement realisiert werden.

In einer weiteren besonderen Ausführungsform weist die Symmetrierungsschaltung zumindest eine weitere Reihenschaltung von zwei weiteren Zwischenkreiskondensatoren auf, die im Folgenden zur Unterscheidung von dem ersten und dem zweiten Zwischenkreiskondensator auch als dritter und vierter Zwischenkreiskondensator bezeichnet werden. Der erste und der zweite weitere Zwischenkreiskondensator, also der dritte und der vierte Zwischenkreiskondensator, sind parallel zu dem ersten bzw. zweiten Zwischenkreiskondensator angeschlossen und die Reihenschaltung aus erstem und zweitem Zwischenkreiskondensator und die Reihenschaltung aus drittem und viertem Zwischenkreiskondensator ist über einen zwischen die beiden Mittelabgriffe zwischen erstem und zweitem Zwischenkreiskondensator bzw. drittem und viertem Zwischenkreiskondensator geschalteten Ausgleichswiderstand verbunden. Eine solche Symmetrierungsschaltung mit zumindest zwei Zweigen mit jeweils zwei in Reihe geschalteten Zwischenkreiskondensatoren wird im Folgenden auch als Symmetrierungsnetzwerk bezeichnet und ein solches Symmetrierungsnetzwerk erleichtert wegen der Möglichkeit der Verwendung einer Vielzahl von dann als Zwischenkreiskondensatoren fungierenden Kondensatoren das Erreichen der insgesamt erforderlichen Zwischenkreiskapazität.

In einer weiteren Ausführungsform der Symmetrierungsschaltung ist vorgesehen, dass das Symmetrierungsnetzwerk mindestens noch eine zusätzliche Reihenschaltung von zwei weiteren Zwischenkreiskondensatoren aufweist, die an das Symmetrierungsnetzwerk genauso angeschlossen ist, wie die oben erwähnte weitere Reihenschaltung mit dem dritten und dem vierten Zwischenkreiskondensator. Auf diese Weise kann die Zwischenkreiskapazität durch sukzessive Hinzunahme zusätzlicher Reihenschaltungen von Zwischenkreiskondensatoren schrittweise erhöht werden, bis die erforderliche Zwischenkreiskapazität bei der gleichzeitigen Möglichkeit der Verwendung von einzelnen Zwischenkreiskondensatoren mit bestimmter Spannungsfestigkeit erreicht ist.

Die eingangs genannte Aufgabe wird auch mit einem Verfahren zum Betrieb der Symmetrierungsschaltung mit den Merkmalen in Anspruch 5 gelöst. Dazu ist bei einem Verfahren zum Betrieb der hier und im Folgenden beschrieben Symmetrierungsschaltung vorgesehen, dass eine erste und eine zweite Mittenspannung jeweils zumindest über dem ersten und dem zweiten Zwischenkreiskondensator oder ein Maß für die erste und eine zweite Mittenspannung gemessen oder in sonst geeigneter Weise erfasst werden und dass bei einem oberhalb eines vorgegebenen oder vorgebbaren Schwellwerts liegenden Unterschied zwischen der ersten und der zweiten Mittenspannung das zu demjenigen Zwischenkreiskondensator mit der höheren Mittenspannung parallel geschaltete Schaltelement mit einem Pulsmuster mit einer vorgegebenen Pulsfrequenz angesteuert wird. Mit dem Ansteuern des Schaltelements, z.B. einem Transistor als Schaltelement, wird dieses leitend und ein von der Spannung über dem jeweiligen Zwischenkreiskondensator getriebener Strom fließt durch die Induktivität, so dass dort die elektrische Energie gespeichert wird, während sich der jeweilige Zwischenkreiskondensator partiell entlädt. Wenn durch das Pulsmuster keine Ansteuerung des jeweiligen Schaltelements mehr bewirkt wird und das Schaltelement entsprechend sperrt, wird die in der Induktivität gespeicherte elektrische Energie in den jeweils komplementären Zwischenkreiskondensator entladen. Auf diese Weis sinkt die Spannung über demjenigen Zwischenkreiskondensator, bei dem eine Spannungsüberhöhung festgestellt wurde, und die Spannung über dem komplementären Zwischenkreiskondensator steigt an, so dass sich wieder eine Symmetrie einstellt.

Bei einer besonderen Ausführungsform des Verfahrens wird die dem jeweiligen Pulsmuster zugrunde liegende Pulsfrequenz mit einer die beiden Mittenspannungen oder eine Differenz der beiden Mittenspannungen überwachenden Regelschaltung generiert. Die Pulsfrequenz kann demnach abhängig z.B. von der Differenz der beiden Mittenspannungen eingestellt werden, so dass bei einer hohen Pulsfrequenz die für die Symmetrierung benötigte Zeit verringert wird.

Die Symmetrierungsschaltung und das Verfahren zu deren Betrieb wie hier und nachfolgend beschrieben eignet sich besonders für Zwischenkreisumrichter zur Verwendung in der Antriebstechnik, so dass die Erfindung auch solche Zwischenkreisumrichter mit einer solchen Symmetrierungsschaltung betrifft, wobei die von der Symmetrierungsschaltung umfassten Kondensatoren als Zwischenkreiskondensatoren des Zwischenkreisumrichters fungieren. Die Verwendung der Symmetrierungsschaltung und ihrer Ausgestaltungen kommt besonders für Zwischenkreisumrichter für Spannungen größer als 400 Volt in Betracht. Ein solcher Zwischenkreisumrichter weist Mittel zur Ausführung der hier und nachfolgend beschriebenen Verfahrensschritte auf, insbesondere eine erste und eine zweite Spannungsmessvorrichtung zur Messung der ersten und zweiten Mittenspannung oder zur Erfassung eines Maßes für die erste und zweite Mittenspannung sowie eine Regelungseinrichtung zur Generierung der dem jeweiligen Pulsmusters zugrunde liegenden Pulsfrequenz in Abhängigkeit von den beiden Mittenspannungen oder einer Differenz der beiden Mittenspannungen. Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine bekannte Symmetrierungsschaltung und
- FIG 2: eine Symmetrierungsschaltung nach dem Ansatz gemäß der Erfindung.

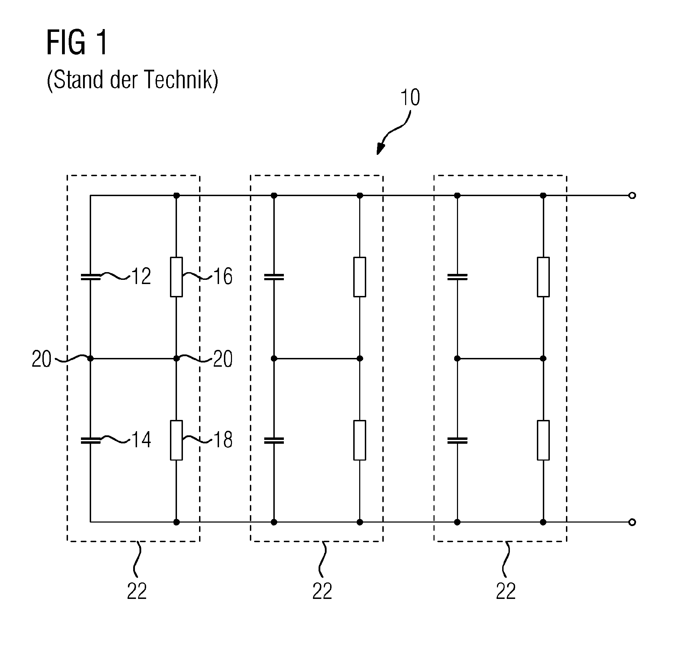

FIG 1 zeigt eine im Stand der Technik bekannte Symmetrierungsschaltung 10 zur Symmetrierung von zumindest einem ersten Zwischenkreiskondensator 12 und einem damit in Reihe geschalteten, zweiten Zwischenkreiskondensator 14.

Zur Symmetrierung der zumindest zwei von der Symmetrierungsschaltung 10 umfassten Zwischenkreiskondensatoren 12, 14 sind ein erster Widerstand 16 und ein damit in Reihe geschalteter zweiter Widerstand 18 vorgesehen. Jeder Widerstand 16, 18 ist dabei parallel zu einem der beiden Zwischenkreiskondensatoren 12, 14 angeschlossen. Zwischen den beiden Zwischenkreiskondensatoren 12, 14 und den beiden Widerständen 16, 18 befindet sich jeweils ein Mittelabgriff 20. Die Reihenschaltung der zumindest zwei Zwischenkreiskondensatoren 12, 14 und die damit parallele Reihenschaltung der beiden Widerstände 16, 18 kann insgesamt als Zweipol 22 aufgefasst werden und wie die Darstellung in FIG 1 zeigt, kann die Symmetrierungsschaltung 10 mehrere gleichartige Zweipole 22 der soeben beschriebenen Art umfassen, um die erforderliche Zwischenkreiskapazität zu erreichen. Die Zwischenkreiskapazität ergibt sich bei einer Symmetrierungsschaltung 10 durch die Parallelschaltung von drei Zwischenkreiskondensatorreihenschaltungen.

Bei den im Stand der Technik bekannten Symmetrierungsschaltungen 10 sind die Reihenschaltungen der davon umfassten Zwischenkreiskondensatoren 12, 14 jeweils einzeln symmetrisiert. Durch das sich insgesamt ergebende Symmetrierungswiderstandsnetzwerk fließt allerdings ein Strom, was zu einer dauernden Verlustleistung im Betrieb führt. Bei einer Verwendung der in FIG 1 gezeigten Symmetrierungsschaltung 10 als Zwischenkreisbeschaltung eines Zwischenkreisumrichters (nicht dargestellt; an sich bekannt) mit einem 18 A Leistungsteil mit 600 Volt Zwischenkreisspannung fließt durch das Symmetrierungswiderstandsnetzwerk z.B. ein Strom von 5 mA, was zu einer dauernden Verlustleistung von 3 Watt im Betrieb führt. In einem Dreischichtbetrieb ergibt sich daraus eine Verlustleistung von 26,28 kWh pro Jahr. Bei einer Installation von beispielsweise 100.000 Antriebsachsen mit jeweils einem Zwischenkreisumrichter und einer derartigen Symmetrierungsschaltung entsteht jährlich insgesamt eine Verlustenergie von 2.628 MWh allein durch die Symmetrierung.

Der hier vorgeschlagene Ansatz hat zum Ziel, die Verlustleistung, die durch eine passive Symmetrierung, wie in FIG 1 dargestellt, entsteht, zu reduzieren. Dies wird durch eine aktive Beschaltung und eine Ladungsverschiebung zur Umladung erreicht.

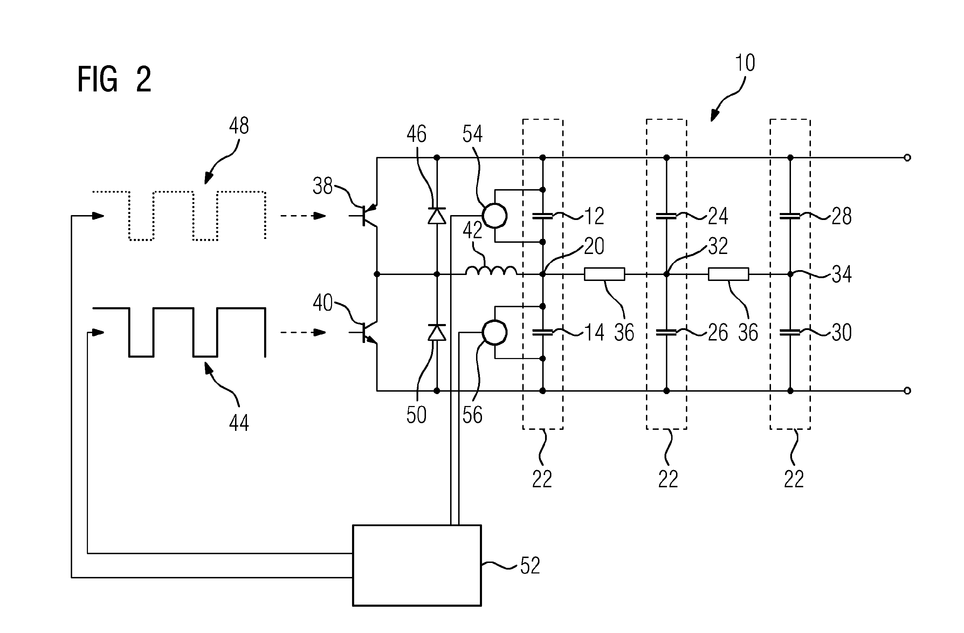

FIG 2 zeigt eine mögliche Ausführungsform einer Symmetrierungsschaltung 10 zur verlustarmen Symmetrierung der Zwischenkreiskondensatoren 12, 14. Diese umfasst in einer Reihenschaltung zumindest einen ersten Zwischenkreiskondensator 12 und einen zweiten Zwischenkreiskondensator 14. Tatsächlich umfasst die dargestellte Symmetrierungsschaltung 10 noch einen weiteren ersten und zweiten Zwischenkreiskondensator 24, 26 - im Folgenden zur Unterscheidung als dritter und vierter Zwischenkreiskondensator 24, 26 bezeichnet - und einen zusätzlichen ersten und zweiten Zwischenkreiskondensator 28, 30, die entsprechend im Folgenden und zur Unterscheidung als fünfter und sechster Zwischenkreiskondensator 28, 30 bezeichnet werden.

Jeder der durch die Reihenschaltung der jeweils zwei Zwischenkreiskondensatoren 12, 14; 24, 26; 28, 30 gebildeten Zweipole 22 weist jeweils einen Mittelabgriff 20, 32, 34 auf und die Zweipole 22 sind untereinander an ihren Mittelabgriffen 20, 32, 34 durch Ausgleichswiderstände 36 verbunden. Die Symmetrierungsschaltung 10 kann einen der hier dargestellten Zweipole 22, oder zwei, drei oder mehr der hier dargestellten Zweipole 22 umfassen, je nachdem wie viele Kondensatoren erforderlich sind, um die benötigte Zwischenkreiskapazität zu erreichen.

In einem Parallelzweig zu dem ersten Zwischenkreiskondensator 12 und einem Parallelzweig zu dem zweiten Zwischenkreiskondensator 14 - oder einem Parallelzweig zu allen "oberen" Zwischenkreiskondensatoren 12, 24, 28 bzw. einem Parallelzweig zu allen "unteren" Zwischenkreiskondensatoren 14, 26, 30 - sind ein erstes bzw. ein zweites elektrisches Schaltelement 38, 40 angeschlossen. Bei der in FIG 2 gezeigten Ausführungsform handelt es sich bei den beiden elektrischen Schaltelementen 38, 40 um Transistoren und man beachte die unterschiedlichen Durchlassrichtungen der beiden Transistoren. Des Weiteren ist der Mittelabgriff 20 zwischen dem ersten und dem zweiten Zwischenkreiskondensator 12, 14 durch ein als Energiespeicher fungierendes Bauelement, nämlich hier eine Induktivität 42, mit einem Mittelabgriff zwischen dem ersten und dem zweiten Schaltelement 38, 40, verbunden.

Bei einer Unsymmetrie und einer beispielsweise zugrunde liegenden Spannungsüberhöhung am zweiten Zwischenkreiskondensator 14, z.B. aufgrund von Verschiebeströmen, wird an das zweite Schaltelement 40 ein Pulsmuster 44 mit einer vorgegebenen oder vorgebbaren Pulsfrequenz angelegt, die dafür sorgt, dass bei Anliegen eines Pulses ein Strom durch das zweite Schaltelement 40 und die Induktivität 42 fließt. Der zweite Zwischenkreiskondensator 14 - und über die Ausgleichswiderstände 36 ggf. auch die weiteren "unteren" Zwischenkreiskondensatoren 26, 30 - wird bzw. werden während der Dauer des Stromflusses entladen, so dass eine partielle Entladung, jedenfalls eine Reduzierung des Ladezustands des zweiten Zwischenkreiskondensators 14 oder aller "unteren" Zwischenkreiskondensatoren 14, 26, 30 erreicht wird. Die Spannung (Mittenspannung) über dem zweiten Zwischenkreiskondensator 14 oder allen "unteren" Zwischenkreiskondensatoren 14, 26, 30 geht damit zurück und die Spannungsüberhöhung verschwindet. In der Lowphase des Pulsmusters 44 sperrt das zweite Schaltelement 40 und die in der Induktivität gespeicherte Energie kann in den ersten Zwischenkreiskondensator 12 - und über die Ausgleichswiderstände 36 ggf. auch die weiteren "oberen" Zwischenkreiskondensatoren 24, 28 - entladen werden. Bei der in FIG 2 gezeigten Ausführungsform ist dafür eine als Freilaufdiode fungierende erste Diode 46 vorgesehen. Im Ergebnis sinkt die Spannung über dem zweiten Zwischenkreiskondensator 14 oder allen unteren Zwischenkreiskondensatoren 14, 26, 30 und im Gegenzug steigt die Spannung über dem ersten Zwischenkreiskondensator 12 oder allen oberen Zwischenkreiskondensatoren 12, 24, 28 und es stellt sich wieder eine Symmetrie der jeweiligen, im Folgenden als Mittenspannung bezeichneten Teilspannungen ein.

Bei einer Unsymmetrie und einer zugrunde liegenden sinkenden Spannung am zweiten Zwischenkreiskondensator 14 oder allen unteren Zwischenkreiskondensatoren 14, 26, 30 wird ein Pulsmuster 48 (punktiert dargestellt) an das erste Schaltelement 38 gelegt. Sobald das erste Schaltelement 38 durchgeschaltet ist, fließt Strom aus dem ersten Zwischenkreiskondensator 12 oder allen oberen Zwischenkreiskondensatoren 12, 24, 28 durch die Induktivität 42 und die so gespeicherte elektrische Energie wird während einer Lowphase des Pulsmusters 48 in den zweiten Zwischenkreiskondensator 14 oder alle unteren Zwischenkreiskondensatoren 14, 26, 30 entladen, so dass die Spannung über dem oder jedem unterem Zwischenkreiskondensator 14, 26, 28 steigt und die Symmetrie wieder hergestellt wird. Bei der in FIG 2 gezeigten Ausführungsform ist dafür eine als Freilaufdiode fungierende zweite Diode 50 vorgesehen und man beachte die gleichsinnigen Durchlassrichtungen der beiden Dioden 46, 50 und die gegensinnigen Durchlassrichtungen der beiden Transistoren 38, 40.

Einer übergeordneten Regelschaltung 52 sind Messwerte einer ersten und einer zweiten Spannungsmessvorrichtung 54, 56 zur Messung jeweils der ersten und zweiten Mittenspannung, also der Spannung über dem oder jedem oberen Zwischenkreiskondensator 12, 24, 28 bzw. dem oder jedem unteren Zwischenkreiskondensator 14, 26, 30, oder zur Erfassung eines Maßes für diese Spannungen zuführbar. Die Regelschaltung 52 generiert die jeweils benötigten Pulsmuster 44, 48 mit einer Pulsfrequenz oder Periodendauer entsprechend einer etwaigen Abweichung zwischen den gemessenen Mittenspannungen oder den erfassten Maßen für diese Spannungen. Zur Messung der Spannungen oder zur Erfassung jeweils eines Maßes für die Spannungen kann die Symmetrierungsschaltung 10 in an sich bekannter Art und Weise einen sogenannten Shunt-Widerstand oder dergleichen umfassen (nicht gezeigt). Gleichfalls nicht gezeigt ist die Verwendung der Symmetrierungsschaltung 10 gemäß FIG 2 in einem Zwischenkreisumrichter. Solche Zwischenkreisumrichter sind allerdings an sich bekannt und die Symmetrierungsschaltung 10 mit den davon umfassten Zwischenkreiskondensatoren 12, 14; 24, 26; 28, 30 ist von einem Zwischenkreisumrichter oder einer Zwischenkreisumrichterschaltung an der Stelle umfasst, an der in einem entsprechenden Ersatzschaltbild die Zwischenkreiskapazität dargestellt wird.

Einzelne im Vordergrund stehende Aspekte der hier eingereichten Beschreibung lassen sich damit kurz wie folgt zusammenfassen: Angegeben wird eine Symmetrierungsschaltung zur Symmetrierung von zumindest einem ersten und einem zweiten in Reihe geschalteten Zwischenkreiskondensator 12, 14 und ein Verfahren zu deren Betrieb sowie eine Verwendung einer solchen Schaltung für einen Zwischenkreisumrichter, wobei in einem Parallelzweig zu dem ersten Zwischenkreiskondensator 12 und einem Parallelzweig zu dem zweiten Zwischenkreiskondensator 14 ein erstes bzw. ein zweites elektrisches Schaltelement 38, 40 angeschlossen ist, wobei ein Mittelabgriff zwischen dem ersten und dem zweiten Zwischenkreiskondensator 12, 14 und ein Mittelabgriff zwischen dem ersten und dem zweiten Schaltelement 38, 40 durch eine Induktivität 42 verbunden sind und wobei bei einer Spannungsüberhöhung am ersten oder am zweiten Zwischenkreiskondensator 12, 14 eine Pulsfrequenz an das erste bzw. zweite Schaltelement 38, 40 anlegbar und der erste oder zweite Zwischenkreiskondensator 12, 14 während einer jeweiligen Pulsdauer über die Induktivität 42 und das jeweilige Schaltelement 38, 40 partiell entladbar ist. Bei den beschriebenen Symmetriervorgängen entsteht kaum Verlustleistung, da die elektrische Energie nur zwischen kapazitiven und induktiven Energiespeichern ausgetauscht wird. Somit lassen sich energieeffizientere Leistungsteile zum Beispiel für Antriebsachsen und dergleichen realisieren.

## Patentansprüche

1. Symmetrierungsschaltung zur Symmetrierung von zumindest einem ersten und einem zweiten in Reihe geschalteten Zwischenkreiskondensator (12,14),
wobei in einem Parallelzweig zu dem ersten Zwischenkreiskondensator (12) und einem Parallelzweig zu dem zweiten Zwischenkreiskondensator (14) ein erstes bzw. ein zweites elektrisches Schaltelement (38,40) angeschlossen ist,
wobei ein Mittelabgriff zwischen dem ersten und dem zweiten Zwischenkreiskondensator (12,14) und ein Mittelabgriff zwischen dem ersten und dem zweiten Schaltelement (38,40) durch eine Induktivität (42) verbunden sind
und wobei bei einer Spannungsüberhöhung am ersten oder am zweiten Zwischenkreiskondensator (12,14) eine Pulsfrequenz an das erste bzw. zweite Schaltelement (38,40) anlegbar und der erste oder zweite Zwischenkreiskondensator (12,14) während einer jeweiligen Pulsdauer über die Induktivität (42) und das jeweilige Schaltelement (38,40) partiell entladbar ist.

2. Symmetrierungsschaltung nach Anspruch 1, mit jeweils einer zum ersten und zum zweiten Zwischenkreiskondensator (12,14) parallel geschalteten Diode (46,50), wobei ein Mittelabgriff zwischen den beiden Dioden (46,50) auf elektrisch gleichem Potential wie der Mittelabgriff zwischen dem ersten und dem zweiten Schaltelement (38,40) liegt.

3. Symmetrierungsschaltung nach Anspruch 1 oder 2, mit zumindest einer weiteren Reihenschaltung von zwei weiteren Zwischenkreiskondensatoren (24,26), wobei der erste und der zweite weitere Zwischenkreiskondensator (24,26) parallel zu dem ersten bzw. zweiten Zwischenkreiskondensator (12,14) angeschlossen ist und wobei die Reihenschaltung aus erstem und zweitem Zwischenkreiskondensator (12,14) und die Reihenschaltung aus erstem und zweitem weiteren Zwischenkreiskondensator (24,26) über einen zwischen die beiden Mittelabgriffe zwischen erstem und zweitem Zwischenkreiskondensator (12,14) bzw. erstem und zweitem weiteren Zwischenkreiskondensator (24,26) geschalteten Ausgleichswiderstand (36) verbunden sind.

4. Symmetrierungsschaltung mit mindestens einer genauso wie die weitere Reihenschaltung von zwei weiteren Zwischenkreiskondensatoren (24,26) angeschlossenen zusätzlichen Reihenschaltung von zwei zusätzlichen Zwischenkreiskondensatoren (28, 30) .

5. Verfahren zum Betrieb der Symmetrierungsschaltung nach einem der vorangehenden Ansprüche, wobei eine erste und eine zweite Mittenspannung jeweils zumindest über dem ersten und dem zweiten Zwischenkreiskondensator (12,14) gemessen werden und wobei bei einem oberhalb eines vorgegebenen oder vorgebbaren Schwellwerts liegenden Unterschied zwischen der ersten und der zweiten Mittenspannung das zu demjenigen Zwischenkreiskondensator (12,14) mit der höheren Mittenspannung parallel geschaltete Schaltelement (38,40) mit einem Pulsmuster mit einer vorgebbaren Pulsfrequenz angesteuert wird.

6. Verfahren nach Anspruch 5, wobei die dem jeweiligen Pulsmuster zugrunde liegende Pulsfrequenz mit einer die beiden Mittenspannungen oder eine Differenz der beiden Mittenspannungen überwachenden Regelschaltung (52) generiert wird.

7. Zwischenkreisumrichter zur Verwendung in der Antriebstechnik mit einer Symmetrierungsschaltung (10) nach einem der Ansprüche 1 bis 4, wobei die von der Symmetrierungsschaltung (10) umfassten Kondensatoren (12,14;24,26;28,30) als Zwischenkreiskondensatoren des Zwischenkreisumrichters fungieren.

8. Zwischenkreisumrichter nach Anspruch 7 für Spannungen größer als vierhundert Volt.

9. Zwischenkreisumrichter nach Anspruch 7 oder 8, mit Mitteln (52,54,56) zur Ausführung der Verfahrensschritte gemäß Anspruch 5 oder 6.

10. Zwischenkreisumrichter nach Anspruch 9, mit zumindest einer ersten und einer zweiten Spannungsmessvorrichtung (54, 56) zur Messung der ersten und zweiten Mittenspannung und einer Regelungseinrichtung (52) zur Generierung des Pulsmusters mit der jeweils zugrunde liegenden Pulsfrequenz in Abhängigkeit von den beiden Mittenspannungen oder einer Differenz der beiden Mittenspannungen.
